# EUROPÄISCHE PATENTSCHRIFT

(11) **EP 3 894 912 B1**
(45) Veröffentlichungstag und Bekanntmachung des Hinweises auf die Patenterteilung: **22.10.2025**
(21) Anmeldenummer: 19820670.8
(22) Anmeldetag: 02.12.2019
(51) Int. Cl.: G02B 5/08, G02B 5/124, G02B 5/128

(54) **FLÄCHIGER RETROREFLEKTOR**
PLANAR RETROREFLECTOR
RÉTRORÉFLECTEUR PLAN

(30) Priorität: 10.12.2018 DE 102018131554
(43) Veröffentlichungstag der Anmeldung: 20.10.2021
(73) Patentinhaber: Giesecke+Devrient Currency Technology GmbH, 81677 München (DE)
(72) Erfinder: LOCHBIHLER, Hans, 80337 München (DE)
(74) Vertreter: Patentanwälte Geyer, Fehners & Partner mbB
(86) Internationale Anmeldenummer: PCT/EP2019/000329
(87) Internationale Veröffentlichungsnummer: WO 2020/119937

(56) Entgegenhaltungen:
- WO-A1-2008/121475
- WO-A1-2018/217519
- US-A1- 2015 173 302

## Beschreibung

Die Erfindung betrifft eine flächige Reflexionsstruktur, z. B. einen Retroreflektor, die eine in einem Kunststoffmaterial ausgebildete, retroreflektierende, mikroprismatische Reliefstruktur aufweist und eine von einer Einfallsseite einfallende optische Strahlung mittels Totalreflektion retroreflektiert.

Eine retroreflektierende Struktur reflektiert einfallend optische Strahlung weitgehend unabhängig von der Einfallsrichtung sowie der Ausrichtung des Reflektors großteils in die Richtung, aus der die Strahlung einfällt. Dies wird als Retroreflexion bezeichnet. Bei Planspiegeln hingegen hängt die Rückstrahlung von der Spiegelorientierung ab, die nur in Ausnahmefällen senkrecht zur Strahlquelle ausgerichtet ist. Flächige Retroreflektoren haben eine Vielzahl von nebeneinanderliegenden Einzel-Retroreflektoren. Retroreflektierende Folien sind eine häufige Realisierung flächiger Retroreflektoren. Sie finden vielfältig Anwendungen, insbesondere in der Verkehrstechnik, aber auch in der Sicherheitstechnik, beispielsweise gemäß US 2014/0226212 A1 als Sicherheitselemente zur Authentisierung von Wertdokumenten. Auch sind die meisten Verkehrsschilder und KFZ-Kennzeichen mit retroreflektierenden Strukturen ausgestattet, um die Sichtbarkeit in der Nacht zu erhöhen oder die Fälschungssicherheit zu verbessern (vgl. US 5656360).

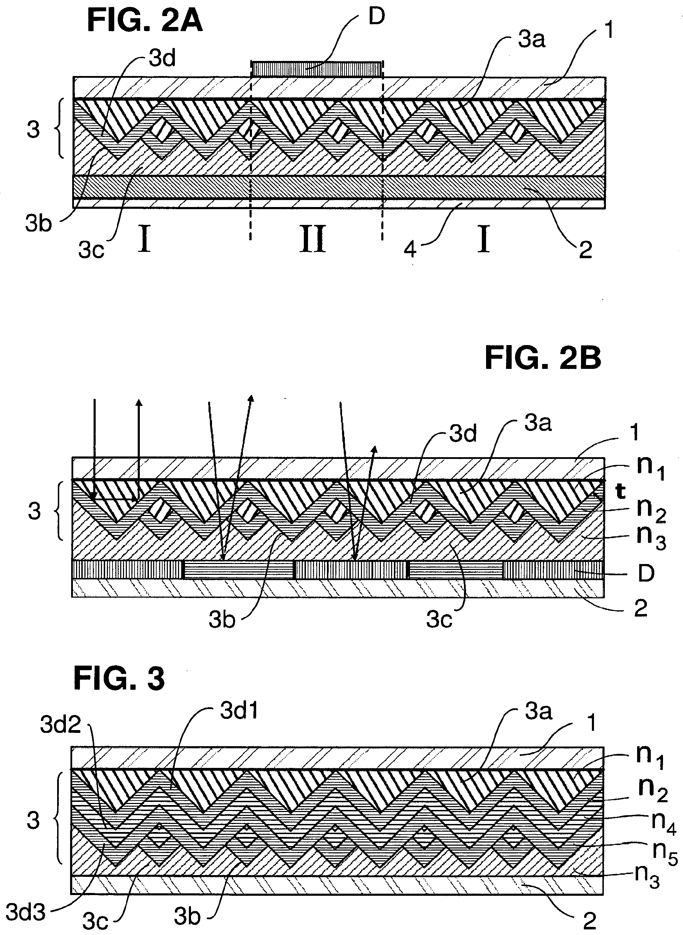

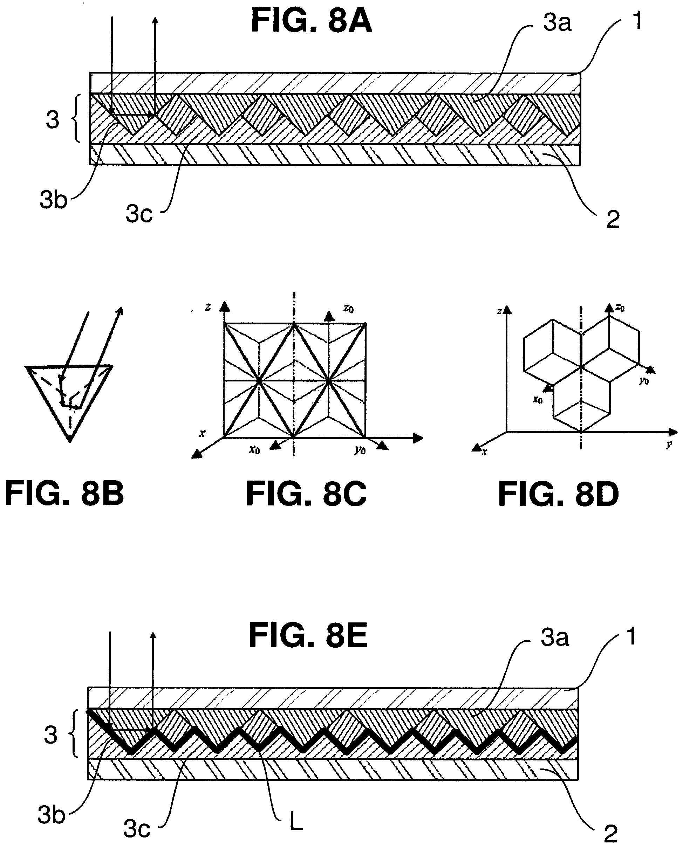

Generell sind zwei Varianten von Retroreflektoren weit verbreitet: Eingebettete hoch brechende Mikrokugeln, welche auf der Unterseite verspiegelt sind, wie z.B. in US 4763985 und US 2009/0300953 A1 beschrieben. Das optische Prinzip beruht hier auf sogenannten Lüneburg-Linsen, welche das einfallende Licht in Richtung der Strahlquelle reflektieren. Die andere Variante, auf deren Gebiet die Erfindung angeordnet ist, basiert auf Reliefstrukturen aus Planflächen, sogenannten Mikroprismen-Strukturen, die meist die Form von Würfelecken haben. Dabei wird das einfallende Licht nacheinander an zwei, i.d.R. sogar drei (bei Tripelprismenstruktur) zueinander geneigten Planflächen der Struktur um jeweils etwa 45° umgelenkt und zur Strahlquelle zurückgeworfen. Diese Geometrie hat die höchste Effizienz der Retroreflexion bei senkrechtem Lichteinfall; die Effizienz nimmt für zunehmend schrägen Lichteinfall ab. Die Geometrie der Struktur ist in Fig. 8A-D dargestellt. Fig. 8A zeigt eine schematische Seitenansicht der Reliefstruktur eines flächigen Retroreflektor mit optischem Pfad der Retroreflexion. Der Retroreflektor ist als Folienverbund aufgebaut, der eine Trägerfolie 1 sowie eine Deckfolie 2 umfasst, in die eine Reflexionsstruktur 3 eingebettet ist. Die Reflexionsstruktur 3 umfasst einfallseitig (bezogen auf die einfallende Strahlung) ein auf der Trägerfolie 1 aufgebrachtes, transparentes Kunststoffmaterial 3a, in dem eine Reliefstruktur 3b aus Planflächen abgeformt ist. Ihre Geometrie ist so ausgebildet, dass einfallende Strahlung mehrfach umgelenkt wird, so dass sie letztlich retroreflektiert wird. Fig. 8B veranschaulicht den Pfad der Retroreflexion, wie er bei Dreiecksflächen eines Tripelprismas auftritt, aus deren Nebeneinanderreihung die retroreflektierende Reliefstruktur 8b für den flächigen Retroreflektor aufgebaut werden kann. Fig. 8C zeigt eine Anordnung der Dreieckflächenstruktur von Fig. 3b in Aufsicht. Fig. 8D zeigt eine Anordnung von quadratischen Flächen als Würfelecken in perspektivischer Form.

Der Rückstrahlwert Ra eines Retroreflektors ist in DIN 67520 definiert durch das Verhältnis aus rückreflektierter Lichtstärke in Candela und Beleuchtungsstärke in Lux (letztere bezogen auf senkrechten Einfall). Ra-Werte für verspiegelte mikroprismatische Strukturen, wie sie z. B. WO 2014/117086 A1 beschreibt, sind deutlich höher als für Retroreflektoren, welche auf Mikrokugeln basieren. Gemäß der Norm liegen für Weiß bei einem Anleuchtwinkel von 5° und einem Beobachtungswinkel 0,2°die Ra-Mindestwerte für Mikrokugelstrukturen bei 70 und für mikroprismatische Strukturen bei 625. Daher sind mikroprismatischen Strukturen bevorzugt, insbesondere, wenn es um eine besonders gute visuelle Wahrnehmbarkeit geht. Ferner kann, wie aus WO 2017/121956 A1 bekannt, ihre Herstellung kostengünstig auf Folien per Vervielfältigung über einen Prägeprozess ausgehend von einer Masterstruktur erfolgen.

Die WO 2014/117086 A1 beschreibt die Bauweise, bei der die Reliefoberfläche metallisch verspiegelt und komplett in Kunststoff eingebettet ist. Bezogen auf Fig. 8A ist die Reliefstruktur 3b, die an den Grenzflächen zwischen Kunststoffmaterial 3a und Deckschicht 3c ausgebildet ist, verspiegelt. Das Licht wird zur Retroreflexion an den verspiegelten Planflächen der Reliefstruktur 3b umgelenkt. Die Umlenkung und damit die Retroreflexion sind deshalb verlustbehaftet. Bei einer Verspiegelung mit Aluminium wird z.B. maximal die Hälfte des einfallenden Lichtes retroreflektiert. Nachteilig ist es zudem, dass solche Retroreflektoren aufgrund der auf der Reliefstruktur notwendigen Spiegelschicht stets metallisch glänzend erscheinen. Für viele Anwendungen, wie z.B. in der Verkehrstechnik (KFZ-Kennzeichen, Verkehrsschilder), wird jedoch eine weiße Erscheinung zumindest bei diffuser Beleuchtung gewünscht. Mitunter ist es (auch) gefordert, dass neben der Retroreflexion eine Untergrundfarbe bzw. ein strukturierter Untergrund über einen weiten Betrachtungswinkelbereich sichtbar ist. Für bestimmte Anwendungen ist eine Retroreflexion im Infrarot gefordert, während im Sichtbaren ein strukturierter Untergrund zu erkennen ist bzw. eine Retroreflexion im Sichtbaren nicht auftreten soll. All dies ist mit einer metallisch verspiegelten Reliefoberfläche nicht realisierbar.

Bei der eingangs genannten und aus US 6413615 B2 bekannten Ausprägung wird die mikroprismatische Strukturen nicht verspiegelt, sondern die Umlenkung an den Planflächen erfolgt durch Totalreflexion. Dies zeigt Fig. 8E. Dieses Prinzip verfolgt die umgangssprachlich als "Katzenaugen" bezeichneten Rückstrahler aus Kunststoff, wie sie u.a. in der Verkehrstechnik Anwendung finden. Sie haben an eine Kunststoffplatte angeformte Tripelprismen, die rückseitig (auf die Lichteinfallsrichtung bezogen) frei sind, also an Luft angrenzen. Sie reflektieren durch Totalreflexion. Durch die rückseitige Grenzfläche zu einem Luftspalt L (in Fig. 8E schwarz gezeichnet) erfährt das einfallende Licht an den Umlenkstellen Totalreflexion. Luft ist wegen ihres Brechungsindex n=1 nötig, um die Totalreflexion zu gewährleisten. Diese Reliefstruktur ist in einem transparenten Kunststoffmaterial mit dem Brechungsindex von typ. 1,5 ausgebildet, z.B. in hochtransparenten Bulkmaterialien wie Polymere (PET, UV-Lacke etc.) haben (n kleiner 1,6) oder Polycarbonat (n=1.58). Einfallendes Licht fällt über das transparente Kunststoffmaterial auf die Reliefstruktur. Da das rückseitig angrenzende Medium im Luftspalt L den Brechungsindex n=1 hat, entsteht die Retroreflexion mittels Totalreflexionen, welche annährend verlustfrei sind. Der Rückstrahlwert ist folglich sehr hoch. Zudem erscheint der flächige Retroreflektor nicht metallisch. Ein zusätzlicher Vorteil ist es, dass das transparente Kunststoffmaterial eingefärbt sein kann. Ein Betrachter nimmt also bei Umgebungsbedingungen nicht nur die Retroreflexion, sondern auch die darunter liegende Farbe wahr. Der Nachteil ist jedoch, dass die Reliefstrukturen für den Luftspalt Lufteinschlüsse benötigen oder an ihrer Rückseite ganz freiliegen müssen. Dies ist aufwändig in der Herstellung und beinhaltet Risiken in der Langzeitstabilität insbesondere im Freien unter realen Umweltbedingungen.

WO 2018/217519 A1 bildet einen derartigen, mit Totalreflexion arbeitenden Retroreflektor weiter, indem zusätzlich mind. eine Doppelschicht vorgesehen wird, um die Reflexionseigenschaften wellenlängenabhängig zu beeinflussen. Die mind. eine Doppelschicht wird auf eine retroreflektierenden Struktur mit Planfläche aufgebracht und bewirkt am Übergang zwischen der mind. einen Doppelschicht und einem Luftspalt die Totalreflexion.

US 2015/0173302 A1 schlägt vor, ein totalreflektierendes Element zur Verbesserung der Beleuchtung von Pflanzen und damit zur Steigerung des Pflanzenwachstums einzusetzen. In einer Ausführungsform werden eine retroreflektierende Prismenstruktur verwendet, wobei die Retroreflexion entweder durch eine metallische Beschichtung oder durch Totalreflexion erreicht wird.

Aus der WO 2008/121475 A1 ist ein hinterleuchtetes Nummernschild bekannt.

Der Erfindung liegt die Aufgabe zugrunde, insbesondere für verkehrstechnische Anwendungen einen flächigen Retroreflektor mit retroreflektierender, mikroprismatischer Reliefstruktur zu schaffen, der eine nicht-metallische Erscheinung bei zugleich leichter Herstellbarkeit und guter Langzeitstabilität aufweist.

Die Erfindung ist in den unabhängigen Ansprüchen definiert. Die abhängigen Ansprüche betreffen vorteilhafte Weiterbildungen.

Die Erfindung geht von einem flächigen Retroreflektor aus, der Totalreflexion nutzt, um einen besonders hohen Rückstrahlwert zu erreichen. In einem transparenten Kunststoffmaterial ist eine retroreflektierende, mikroprismatische Reliefstruktur ausgebildet. Sie weist passend angeordnete Planflächen auf, z.B. in Form nebeneinanderliegender Tripelprismenflächen (Dreiecksflächen bzw. Würfelecken). Die Oberfläche der Reliefstruktur ist (mind. bereichsweise) mit einer dielektrischen Beschichtung überzogen. Eine Deckschicht deckt die dielektrische Beschichtung an ihrer (in Betrachtungsrichtung) rückseitigen Fläche ab. Ein Brechungsindex dieser Deckschicht ist bevorzugt geringer als der der dielektrischen Beschichtung. Er kann auch gleich sein. Die dielektrische Beschichtung hat somit einen Brechungsindex, der höher oder gleich ist, als der der rückseitig angrenzenden Deckschicht. Ist der Brechungsindex der dielektrischen Beschichtung höher als der der rückseitig angrenzenden Deckschicht, trifft Licht, das auf die Reliefstruktur einfällt, aus der höher brechenden Beschichtung auf das rückseitig angrenzende Material der Deckschicht und wird durch diesen Brechungsindexsprung totalreflektiert. Eine Reflexion tritt ebenfalls auf, wenn der Brechungsindex der dielektrischen Beschichtung gleich dem Brechungsindex der rückseitig angrenzenden Deckschicht ist, da in diesem Fall Unterschiede im Brechungsindex zwischen dem (vorderseitig gelegenen) Kunststoffmaterial und der Beschichtung vorhanden sind und für die Reflexion verantwortlich werden.

Wesentlich für das Konzept ist es, dass die Reliefstruktur einfallsseitig mit der hochbrechenden Beschichtung versehen ist, so dass der Brechungsindexsprung entweder zum rückseitigen und/oder zum vorderseitigen Material besteht. Dadurch ist Reflexion oder sogar Totalreflexion ohne Luftspalt möglich und die metallische Erscheinung verspiegelter Planflächen tritt nicht auf. Die Begriffe "Einfallsseite" sowie "Rückseite" beziehen sich dabei verständlicherweise auf die Einfallsrichtung der Strahlung, die retroreflektiert werden soll.

Für das erfinderische Konzept ist es nicht entscheidend, in welchem Material die Reliefstruktur ausgebildet ist und welches Material die Reliefstruktur nach seiner Ausbildung und Beschichtung mit dem dielektrischen, hochbrechenden Material abdeckt. Es ist gleichermaßen möglich, die Reliefstruktur in dem oben als Deckschicht bezeichneten Material abzuformen, dann zu beschichten und anschließend das Kunststoffmaterial aufzubringen. Dies ist lediglich eine Frage der bequemeren Herstellung. Soweit nachfolgend davon gesprochen wird, dass die Reliefstruktur im Kunststoffmaterial ausgebildet und mit der Deckschicht abgedeckt ist, sei damit gleichermaßen erfasst, dass die Reliefstruktur auch in der Deckschicht abgeformt, beschichtet und anschließend mit dem Kunststoffmaterial aufgefüllt werden kann.

Die Erfindung erlaubt die Realisierung eines Folienverbundes. Dieser enthält auf einer Folie oder zwischen zwei Folien (von der Einfallseite her aufgezählt) das Kunststoffmaterial, die Reliefstruktur mit hochbrechender dielektrischer Beschichtung und die Deckschicht. Dieser Folienverbund kann besonders bevorzugt mit einer Klebekaschierung versehen werden, so dass der retroreflektierende Folienverbund auf gewünschte Untergründe aufgeklebt werden kann. Da der Retroreflektor weiterhin die Farbe des Untergrundes erkennen lässt, wenn das Kunststoffmaterial transparent oder teiltransparent ist, lässt sich damit eine Oberfläche retroreflektierend ausrüsten, ohne dass die Farbe der Oberfläche verloren ginge. Dies ist beispielsweise bei KFZ-Kennzeichen oder Verkehrsschildern von besonderem Vorteil.

Bevorzugt ist der Brechungsindex der dielektrischen Beschichtung um mind. 20%, besonders bevorzugt um mind. 30%, mind. 40% oder sogar mind. 50% höher als der des rückseitig (in Betrachtungsrichtung) angrenzenden Materials. Die dielektrische Beschichtung ist nicht metallisch und nicht spiegelnd. Die dielektrische Beschichtung ist in der Regel hochbrechend, hat also einen Brechungsindex von mind. 2,0, 2,2, 2,4 oder höher. Bevorzugt ist ihr Brechungsindex höher als der des Materials auf der Rückseite der Reliefstruktur. Er kann auch gleich sein. Als hochbrechendes Material kommt insbesondere eines oder mehrere der folgenden Materialien in Frage: ZnS, ZnO, ZnSe, SiNₓ, SiOx (mit x<1, also unterstöchiometrische Siliziumoxidverbindungen), Cr₂O₃, Nb₂O₅, Ta₂O₅, TiₓO_{y} und ZrO₂.

Eine besonders bevorzugte Dicke für die Beschichtung liegt zwischen 20 nm und 500 nm. Als besonders günstiger Bereich hat sich der Bereich von 40 nm bis 140 nm erwiesen.

Zur Verbesserung der Totalreflexion in bestimmten Spektralbereichen hat sich es als günstig erwiesen, dass die Beschichtung eine Multilayer-Schicht mit alternierendem Brechungsindex, nämlich eine Trilayer-Schicht ist, die eine Schichtabfolge aus höher brechendem, niedriger brechendem und wieder höher brechendem Material hat. Auf Grund dieser Multilayer-Schicht-Ausgestaltung kann als optische Strahlung Infrarotstrahlung retroreflektiert und/oder insgesamt der Rückstrahlwert zusätzlich verbessert werden.

Im Bereich der Sicherheitstechnik, d.h. des Fälschungs- und Kopierschutzes kann der Retroreflektor ebenfalls mit Vorteil eingesetzt werden, insbesondere zur Absicherung von Wertdokumenten etc. Auch kann damit sehr vorteilhaft die Mikrobildstruktur für eine Mikrolinsenanordnung hergestellt werden.

Über die Wahl des Materials und auch die Dicke der dielektrischen Beschichtung kann der Reflexionsgrad der Planflächen der Reliefstruktur eingestellt werden. Dies erlaubt es, den flächigen Retroreflektor so auszubilden, dass sein Untergrund, auf dem er angeordnet ist, weiterhin zu einem gewissen Grade erkennbar bleibt. Dabei entsteht kein metallischer Eindruck, da keine Spiegelschicht verwendet wird. Auf diese Weise kann beispielsweise der Farbeindruck des Untergrundes vom Retroreflektor wiedergegeben werden. Diese Wahlmöglichkeit gibt es weder bei herkömmlichen Retroreflektoren, die mit Totalreflexion arbeiten, noch bei Retroreflektoren, die Spiegelschichten haben.

Geprägte mikroprismatische Strukturen, z.B. Würfeleckenstrukturen bzw. Dreiecksflächenanordnungen, welche mit mindestens einer hochbrechenden Schicht überzogen sind, haben retroreflektierende Eigenschaften auch nach einer kompletten Einbettung der Struktur. Sie können ferner halbtransparent ausgeführt und daher mit einer Farbe unterlegt werden. Die Ausführungsformen vermeiden den Nachteil des Lufteinschlusses, haben dennoch gute Reflexionseigenschaften. Sie können wie die erwähnte metallische Variante gefertigt werden - ohne deren metallische Erscheinung zu haben. Vorteilhaft gegenüber dieser Variante ist nicht nur die bessere Rückreflexion, sondern auch, dass die halbtransparente Reliefstruktur beispielsweise mit einer weißen Farbe bzw. mit einem beliebig strukturierten Untergrund unterlegt werden kann. Das metallische Erscheinungsbild der üblichen retroreflektierenden Folien ist vermieden.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. In den Figuren zeigen:
- Fig. 1A: ein KFZ-Kennzeichen, bei dem eine retroreflektierende Folie zur Anwendung kommt,
- Fig. 1B: eine Banknote, die ein Sicherheitselement mit einem Retroreflektor aufweist,
- Fig. 2A und 2B: schematische Schnittdarstellungen durch flächige Retroreflektoren,
- Fig. 3: eine Schnittdarstellung ähnlich der Fig. 2A und 2B für einen flächigen Retroreflektor mit Trilayer-Beschichtung,
- Fig. 4A und 4B: die spektralen Reflexionseigenschaften eines Retroreflektors mit einer TiO₂-Beschichtung,
- Fig. 5A und 5B: sowie Fig. 6 die spektralen Reflexionseigenschaften eines Retroreflektors mit Trilayer-Beschichtung gemäß Fig. 3 und
- Fig. 7A und 7B: Schnittdarstellungen ähnlich der Fig. 2A für einen flächigen Retroreflektor, der zusätzliche reflektierende Bereiche hat, die andersartig ausgebildet sind.

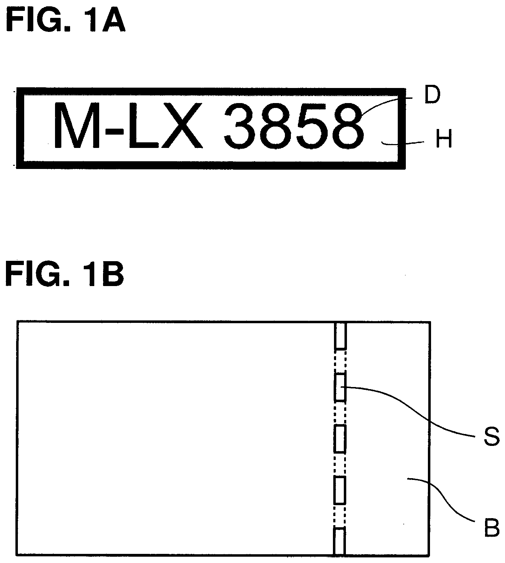

Fig. 1A zeigt ein KFZ-Kennzeichen, das vor einem retroreflektierenden Hintergrund H einen schwarzen Aufdruck D aufweist, der durch die retroreflektierenden Eigenschaften des Hintergrunds H besonders gut zu erkennen ist. Der Hintergrund H ist durch einen retroreflektierenden flächigen Retroreflektor, z.B. eine Folie bewirkt, der nachfolgend anhand der Fig. 2A exemplarisch noch näher erläutert wird. Fig. 1B zeigt ein Sicherheitsmerkmal S auf einer Banknote B, wobei im Sicherheitsmerkmal S ebenfalls ein flächiger Retroreflektor zur Anwendung kommt, wie er nachfolgend noch erläutert wird.

Fig. 2A zeigt den flächigen Retroreflektor für den Hintergrund H des KFZ-Kennzeichens der Fig. 1A in einer schematischen Schnittdarstellung. Der Retroreflektor reflektiert Strahlung, die in Fig. 2A von oben einfällt. Er ist auf einer transparenten Trägerfolie 1 aufgebaut, auf welche ein transparentes Kunststoffmaterial 3a aufgebracht ist, in welches eine retroreflektierende, mikroprismatische Reflexionsstruktur 3b eingeformt ist, beispielsweise eingeprägt. Eine Deckschicht 3c sowie eine Deckfolie 2 decken den Aufbau ab. Zwischen der Deckschicht 3c und dem Kunststoffmaterial 3a und damit auf der Grenzfläche der Reliefstruktur 3b befindet sich eine dielektrische, hochbrechende Beschichtung 3d. Die Reliefstruktur 3b bildet zusammen mit der Beschichtung 3d eine Reflexionsstruktur 3 aus. Über eine Klebekaschierung 4 kann der Folienverbund auf den Träger des Kennzeichens der Fig. 1A aufgeklebt werden. Auf der lichteinfallsseitigen Oberseite des Folienverbundes ist der Aufdruck D aufgedruckt. Er ist aufgrund der retroreflektierenden Eigenschaften des Retroreflektors besonders gut zu erkennen.

Die mikroprismatische Reliefstruktur 3b ist geprägt und bevorzugt in UV-Lack mit Brechungsindex n₁, welchen das Kunststoffmaterial 3a auf der Trägerfolie 1 z.B. aus PET, PP, PE, PC etc. hat. Auf die Reliefstruktur 3b ist die hochbrechende Beschichtung 3d mit Brechungsindex n₂ und der Dicke t aufgebracht. Die Beschichtung 3d wird bevorzugt durch Vakuumbedampfung erzeugt. Schließlich wird sie mit der Deckschicht 3c mit Brechungsindex n₃ abgedeckt.

Fig. 2B zeigt eine ähnliche Ausgestaltung, wobei hierfür die einzelnen Materialien die Brechungsindizes angedeutet sind. Zudem ist zwischen Folie 2 und Deckschicht 3c um eine Beschichtung ergänzt, die eine optische Strukturierung aufweist, beispielsweise den Aufdruck D oder ein Druckbild.

Die optischen Pfade in Fig. 2B verdeutlichen die Retroreflexion an der beschichteten halbtransparenten Grenzfläche der Reliefstruktur 3b als auch die Lichtpfade mit Reflexion am strukturierten Untergrund, z.B. den Aufdruck D. So werden in Fig. 2A und 2B Bereiche I und II geschaffen, die sich in Draufsicht unterscheiden. In Fig. 2A liegen sie auf der Vorderseite, in Fig. 2B unter der Reliefstruktur 3b.

Um den Reflexionsgrad zu erhöhen, ist in grundsätzlich, wie in Fig. 3 gezeigt, die dielektrische, hochbrechende Beschichtung 3d auf der mikroprismatische Reliefstruktur 3 als Mehrfachbeschichtung, in Form einer Trilayer-Beschichtung 3d1, 3d2, 3d3 ausgeführt, wobei die Schichtfolge alternierende Brechungsindizes hat. Fig. 3 zeigt den Retroreflektor im Querschnitt umfassend das transparente Kunststoffmaterial 3a mit Brechungsindex n₁, welches mit drei Schichten (3d1, 3d2, 3d3) der Brechungsindizes n₂, n₄ und n₅ überzogen ist und sich auf der Trägerfolie 1 befindet. Dabei sind die erste und die dritte Schicht 3d1, 3d3 hochbrechend, und es gilt für die Brechungsindizes: n₂>n₁, n₂>n₄, n₅>n₄, n₅>n₃. Diese Schichten haben die Dicken t1, t2 bzw. t3. Die dargestellte Trilayer-Beschichtung ist mit der Deckschicht 3c mit Brechungsindex n₃ abgedeckt und ist durch eine Deckfolie 2 geschützt. Natürlich können auch hier die Aufdrucke D etc. wie in Fig. 2A und 2B verwendet werden.

Bevorzugt gilt n₂>n₁. In Ausführungsformen ist n₂ = n₁. In diesem Fall ist ein Unterschied zwischen n₂ und n₃ vorhanden und für die Reflexion verantwortlich.

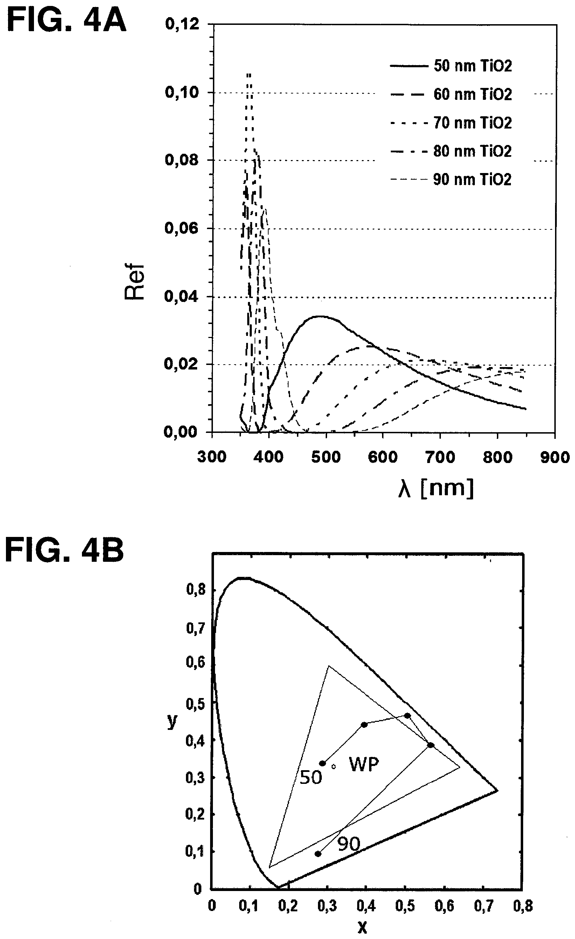

Fig. 4A zeigt die spektrale Reflexion im Sichtbaren in einem mikroprismatischen Retroreflektor, in dem das von oben einfallende Licht dreimal um 45° an der hochbrechend beschichteten Grenzfläche der Reliefstruktur 3b abgelenkt und zurückgeworfen wird. Die Materialien 3a, 3c, zwischen denen die Reliefstruktur 3b gebildet ist und zwischen denen sich die hochbrechende Beschichtung 3d befindet, haben den Brechungsindex n=1.5. Das Material der hochbrechenden Beschichtung 3d ist in diesem Beispiel TiO₂. Der Reflexionswert weist für die Schichtdicke t=50 nm einen Maximalwert von etwa 3,5% auf. Im Vergleich dazu wird bei einer Beschichtung mit Aluminium ein mittlerer Reflexionswert bei 3-fach Reflexion unter jeweils alpha=45° von etwa 55% erreicht. Aus diesem Vergleich folgt ein Ra-Wert von etwa 70 für den Retroreflektor.

Zur Erläuterung der Farbeigenschaften dieser Beschichtung im CIE-1931 Farbraum wurden die Reflexionsspektren mit der Emissionskurve einer D65-Normlampe und der Empfindlichkeit des menschlichen Auges gefaltet und Farbkoordinaten X, Y, Z errechnet. Die D65-Beleuchtung entspricht etwa dem Tageslicht. Die XYZ-Koordinaten wurden anschließend in Farbwerte x,y umgerechnet und in das Farbdiagramm von Fig. 4B eingetragen. Diese Werte können direkt dem menschlichen Empfinden bei der Farbwahrnehmung eines Betrachters zugeordnet werden. Zusätzlich ist der Weißpunkt eingetragen und mit "WP" gekennzeichnet. Das Dreieck begrenzt den Farbbereich, der üblicherweise mit Bildschirmen dargestellt werden kann.

Aus diesen Farbdiagramm ist es ersichtlich, dass mit einer Schichtdicke von etwa 50 nm TiO₂ ein farblich neutraler Farbton (Weißton) erzielt wird. Ferner kann durch die Wahl einer dickeren TiO₂ Schicht ein vordefinierter Farbton für die Retroreflexion eingestellt werden.

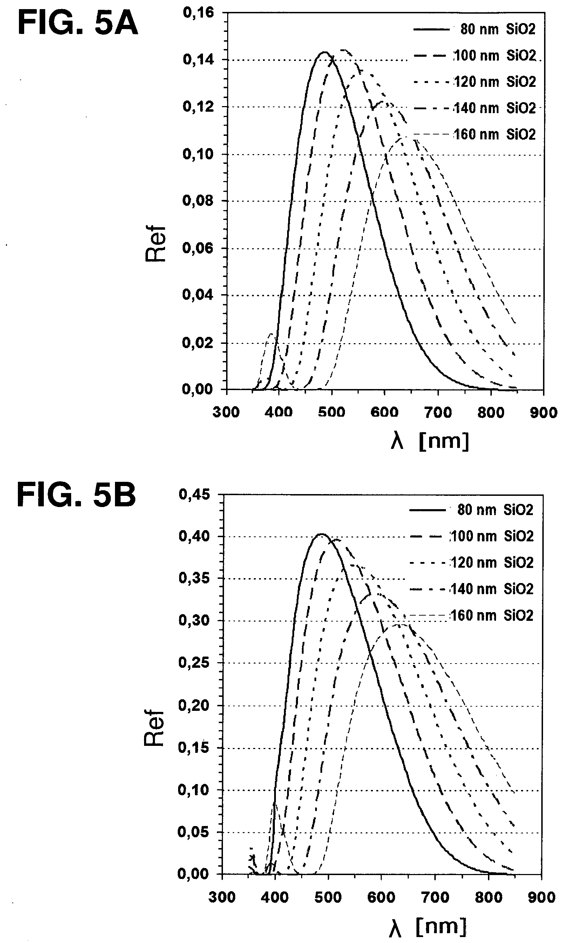

Wenn höhere Retroreflexionswerte gewünscht werden, können, wie anhand Fig. 3 erläutert, mehrere Schichten mit alternierenden Brechungsindices auf die mikroprismatische Reliefstruktur 3b aufgebracht werden. Fig. 5A und 5B zeigen die spektrale Reflexion im Sichtbaren für drei Schichten, welche wiederum in Materialien 3a, 3c mit Brechungsindex n=1.5 eingebettet sind. Dabei besteht in Fig. 5A die erste und die dritte Schicht aus ZnS; bei Fig. 5B sind diese Schichten aus TiO₂. Die mittlere Schicht besteht jeweils aus Siliziumdioxid (SiO₂). Die Schichtdicke von ZnS (siehe Fig. 5A) ist t=60 nm, Die Schichtdicke von TiO₂ (siehe Fig. 5B) beträgt t=50 nm. Die unterschiedlichen Spektren beziehen sich auf verschiedene Schichtdicken von SiO₂ im Bereich 80 nm ≤ t ≤ 160 nm. Daraus ist ersichtlich, dass für einen Retroreflektor mit einem ZnS-Trilayer ein maximaler Reflexionswert von etwa 14% erzielt werden kann. Dieser Wert steigt bei der Verwendung von TiO₂ sogar auf ca. 40% an. Deshalb haben mikroprismatische Retroreflektoren mit einer hochbrechenden Trilayer-Beschichtung 3d1, 3d2, 3d3 gemäß Fig. 3 Ra-Werte von mehreren Hundert. Ein farblich neutraler Wert wird für ZnS als auch für TiO₂ bei der SiO₂ Schichtdicke t=80 nm erreicht. Zudem haben diese Strukturen den Vorteil, dass sie nicht metallisch erscheinen und der Untergrund aufgrund der Halbtransparenz der Beschichtung sichtbar ist. Er kann somit strukturiert, z.B. bedruckt sein, wie exemplarisch in Fig. 2B vorgesehen. Das Beispiel der Trilayer Beschichtung gegenüber der Einfachbeschichtung von Fig. 4 zeigt, dass der Grad der Retroreflexion durch eine Mehrfachbeschichtung deutlich gesteigert werden kann. Für Anwendungen, bei denen noch höhere Reflexionswerte gefordert sind, kann dies durch eine Erhöhung der Anzahl von Schichten mit alternierendem Brechungsindex erreicht werden.

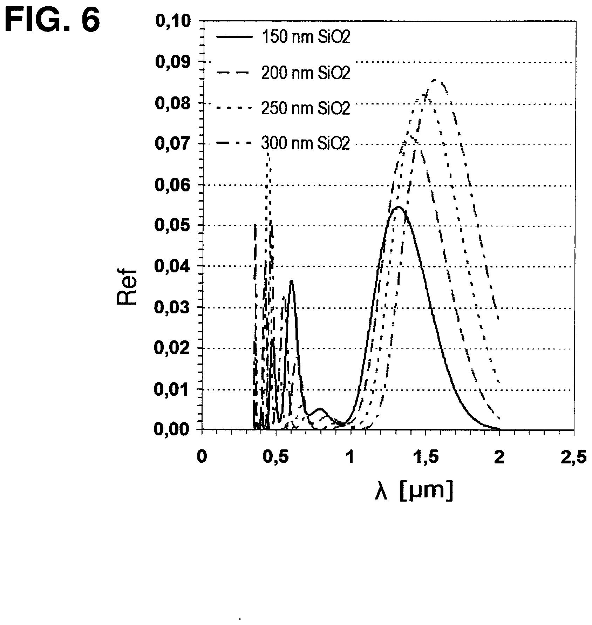

Weiter kann die hochbrechende Beschichtung so gewählt sein, dass Reflexion vorwiegend im Infraroten auftritt. Fig. 6 zeigt die spektrale Reflexion eines mikroprismatischen Retroreflektors, welcher in diesem Beispiel mit einem Trilayer, bestehend aus 160 nm ZnS, verschiedenen Dicken SiO₂ und 220 nm ZnS beschichtet ist. Für diese Beschichtung liegt das Maximum des Reflexionswertes im nahen Infraroten bei einer Wellenlänge von etwa 1500 nm. Im Sichtbaren ist die Retroreflexion deutlich schwächer ausgeprägt. Durch die Wahl der Schichtdicke kann der Maximalwert der Retroreflexion auf eine vorgegebene Schwerpunktwellenlänge eingestellt werden

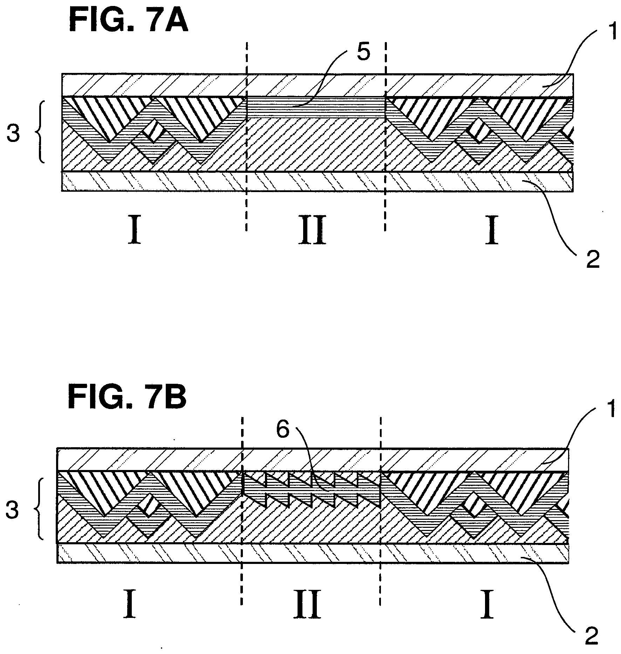

Die mikroprismatische Reliefstruktur mit hochbrechender Beschichtung ist in Weiterbildungen so angeordnet, dass benachbarte Bereiche in der horizontalen Ebene unterschiedliche Ausprägungen haben und somit andere optische Effekte aufweisen. In Fig. 7A ist neben den mikroprismatischen Bereichen I ein weiterer Bereich II dargestellt, der eine ebene Spiegelfläche 5 ist und somit keine Retroreflexion zeigt. Der Bereich II von Fig. 7B beinhaltet eine Sägezahnstruktur 6, welche geeignet ist, Bewegungseffekte und auch räumliche Effekte für einen Betrachter darzustellen. Ferner sind in Ausführungsformen auch Bereiche II mit holographischen Strukturen vorgesehen. Die Bereiche II können ein Motiv kodieren, z.B. durch ihren Umriss.

In weiteren Ausführungsformen befinden sich in Abschnitten unterhalb der Beschichtung 3d metallisierte Flächen. Diese metallisierten Flächen können zur Effektverstärkung in den oben erwähnten nicht retroreflektierenden Bereichen dienen. Diese zusätzlich metallisierten Bereiche sind jedoch nicht zwingend auf diese Flächen beschränkt.

Zur Herstellung wird eine Abformvorlage der Reliefstruktur 3b erzeugt, bevorzugt durch Diamantfräsverfahren, Diamantstichel-Verfahren, Ätzverfahren oder lithographische Verfahren. Bei letzterem können Laserschreibanlagen und vor allem Anlagen, welche auf dem Zwei-Photonenabsorptionsprozess basieren, zum Einsatz kommen. Die so hergestellte Vorlage wird nun galvanisch oder durch ein Nanoimprint-Verfahren umkopiert. Weiter wird eine Vielfachanordnung des Originalmusters durch Heißprägen oder durch Nanoimprint auf einer Matrize eingesetzt, um einen Prägezylinder für die spätere Vervielfältigung herzustellen. Solche Prägezylinder erlauben schließlich die kontinuierliche Vervielfältigung der Originalstruktur in UV-Lack oder durch Heißprägen auf Folien in einem Rolle-zu-Rolle Prozess.

Schließlich wird die in die Folie geprägte Reliefstruktur mit einer hochbrechenden Beschichtung bzw. einer Beschichtungsfolge überzogen. Hier kommen bevorzugt Sputtern, Elektronenstrahlbedampfen oder thermisches Verdampfen in Frage.

Als hochbrechende Materialien eignen sich besonders ZnS, ZnO, ZnSe, SiNₓ, Cr₂O₃, SiOx (mit x<1, also unterstöchiometrische Siliziumoxidverbindungen), Nb₂O₅, Ta₂O₅, TiₓOₓ und ZrO₂. Wenn eine alternierende Schichtfolge gewählt wird, können als niedrig brechenden Materialien SiO₂, MgF₂ bzw. Polymere zu Einsatz kommen.

Eine bereichsweise zusätzliche Metallisierung kann in Ausführungsformen durch eine vollflächige metallische Bedampfung, bevorzugt mit Aluminium, Chrom etc. und anschließender Demetallisierung erfolgen. Alternativ können auch Bereiche metallisch, z.B. mit Supersilber bedruckt werden.

Die oben beschriebenen retroreflektierenden Strukturen sind in Anwendungsbeispielen in der Verkehrstechnik für die bessere Wahrnehmung von KFZ-Kennzeichen oder von Verkehrsschildern eingesetzt. Strukturen, welche für die Retroreflexion im Infrarotbereich angepasst sind, werden in Ausführungsformen für die Kommunikation autonomer Fahrsysteme mit Markierungspunkten eingesetzt.

Die hier beschriebenen flächigen Retroreflektoren werden in Ausführungsformen mit bekannten holographischen Strukturen bzw. Mikrospiegelanordnungen kombiniert. Diese Strukturen liefern weitere optische Effekte, welche besondere Vorteile bei der Authentisierung z.B. von KFZ-Kennzeichen oder von Wertdokumenten, Ausweisen etc., haben.

## Patentansprüche

1. Reflexionsstruktur, die eine in einem transparenten Kunststoffmaterial (3a) ausgebildete, retroreflektierende, mikroprismatische Reliefstruktur (3b) aufweist und der eine von einer Einfallseite und durch das Kunststoffmaterial (3a) einfallende optische Strahlung mittels Totalreflexion retroreflektiert, wobei die mikroprismatische Reliefstruktur (3b) mit einer dielektrischen Beschichtung (3d) überzogen ist und die dielektrische Beschichtung (3d) rückseitig mit einer Deckschicht (3c) abgedeckt ist, wobei ein Unterschied zwischen Brechungsindex (n₂) der dielektrischen Beschichtung (3d) und Brechungsindex (n₃, n₁) der Deckschicht (3c) und/oder des Kunststoffmaterials (3a) besteht,
**dadurch gekennzeichnet, dass** das Kunststoffmaterial (3a) und die Deckschicht (3c) jeweils die mikroprismatische Refliefstruktur (3b) auffüllen, die Beschichtung (3d) als Trilayer (3d1, 3d2, 3d3) mit der Schichtabfolge hochbrechend-niedrigbrechend-hochbrechend gebildet ist und der Brechungsindex (n₅) der an die Deckschicht (3c) angrenzenden Schicht (3d3) der Schichtabfolge der dielektrischen Beschichtung (3d) größer ist als der Brechungsindex (n₃) der Deckschicht (3c).

2. Reflexionsstruktur nach Anspruch 1, **dadurch gekennzeichnet, dass** die dielektrische Beschichtung (3d) mindestens eines der folgenden Materialen aufweist: ZnS, ZnO, ZnSe, SiNₓ, Cr₂O₃, SiOx (mit x<1, also unterstöchiometrische Siliziumoxidverbindungen), Nb₂O₅, Ta₂O₅, TiₓO_{y} und ZrO₂.

3. Reflexionsstruktur nach einem der Ansprüche 1 oder 2, **dadurch gekennzeichnet, dass** die Beschichtung (3d) eine Schichtdicke (t) zwischen 20 nm und 500 nm hat.

4. Reflexionsstruktur nach Anspruch 3, **dadurch gekennzeichnet, dass** die Schichtdicke (t) zwischen 40 nm und 150 nm liegt.

5. Reflexionsstruktur nach einem der Ansprüche 1 bis 4, **dadurch gekennzeichnet, dass** retroreflektierte Strahlung Infrarotstrahlung ist.

6. Reflexionsstruktur nach einem der Ansprüche 1 bis 5, **dadurch gekennzeichnet, dass** benachbart der Reliefstruktur (3b) eine holografische Struktur und/oder ein verspiegelter Flächenabschnitt (5, 6) vorgesehen ist.

7. Reflexionsstruktur nach einem der Ansprüche 1 bis 6, **dadurch gekennzeichnet, dass** unter der Beschichtung (3d) oder unter der Reliefstruktur (3b) eine motiv- und/oder farbgebende Struktur vorgesehen ist.

8. Reflexionsstruktur nach Anspruch 7, **dadurch gekennzeichnet, dass** die motiv- und/oder farbgebende Struktur eine farbig bedruckte Schicht aufweist.

9. Reflexionsstruktur nach einem der Ansprüche 1 bis 8, **dadurch gekennzeichnet, dass** unter der Beschichtung (3d) oder unter der Reliefstruktur (3b) bereichsweise eine Metallisierung vorgesehen ist.

10. Folienverbund mit einer Trägerfolie (1) und einer Deckfolie (2) zwischen denen der Retroreflektor nach einem der Ansprüche 1 bis 9 angeordnet ist.

11. Mikrobildstruktur für eine Mikrolinsenanordnung, **dadurch gekennzeichnet, dass** sie einen Retroreflektor nach einem der Ansprüche 1 bis 9 aufweist.

## Claims

1. Reflective structure which has a retroreflective, microprismatic relief structure (3b) configured in a transparent plastic material (3a) and which retroreflects an optical radiation incident from an incidence side and through the plastic material (3a) by means of total reflection, wherein the microprismatic relief structure (3b) is coated with a dielectric coating (3d) and the dielectric coating (3d) is concealed on the rear with a cover layer (3c), wherein there is a difference between the refractive index (n₂) of the dielectric coating (3d) and the refractive index (n₃, n₁) of the cover layer (3c) and/or of the plastic material (3a),
**characterized in that** the plastic material (3a) and the cover layer (3c) respectively fill the microprismatic relief structure (3b), the coating (3d) is formed as a trilayer (3d1, 3d2, 3d3) with the layer sequence high refractive-low refractive-high refractive and the refractive index (n₅) of the layer (3d3), adjacent to the cover layer (3c), of the layer sequence of the dielectric coating (3d) is greater than the refractive index (n₃) of the cover layer (3c).

2. Reflective structure according to Claim 1, **characterized in that** the dielectric coating (3d) comprises at least one of the following materials: ZnS, ZnO, ZnSe, SiNₓ, Cr₂O₃, SiOx (with x<1, i.e. substoichiometric silicon oxide compounds), Nb₂O₅, Ta₂O₅, TiₓO_{y} and ZrO₂.

3. Reflective structure according to either one of Claims 1 or 2, **characterized in that** the coating (3d) has a layer thickness (t) of between 20 nm and 500 nm.

4. Reflective structure according to Claim 3, **characterized in that** the layer thickness (t) is between 40 nm and 150 nm.

5. Reflective structure according to any one of Claims 1 to 4, **characterized in that** retroreflected radiation is infrared radiation.

6. Reflective structure according to any one of Claims 1 to 5, **characterized in that** adjacent to the relief structure (3b) a holographic structure and/or a mirrored surface portion (5, 6) is provided.

7. Reflective structure according to any one of Claims 1 to 6, **characterized in that** under the coating (3d) or under the relief structure (3b) a structure imparting motif and/or colour is provided.

8. Reflective structure according to Claim 7, **characterized in that** the structure imparting motif and/or colour comprises a colour-printed layer.

9. Reflective structure according to any one of Claims 1 to 8, **characterized in that** under the coating (3d) or under the relief structure (3b) a metallization is provided in some regions.

10. Film composite comprising a carrier film (1) and a cover film (2) between which the retroreflector according to any one of Claims 1 to 9 is arranged.

11. Microimage structure for a microlens assembly, **characterized in that** it comprises a retroreflector according to any one of Claims 1 to 9.

## Revendications

1. Structure réfléchissante, qui comporte une structure en relief (3b) microprismatique, rétroréfléchissante, réalisée dans un matériau en matière plastique (3a) transparent et qui rétroréfléchit par réflexion totale un rayonnement optique incident depuis un côté d'incidence et à travers le matériau en matière plastique (3a), la structure en relief (3b) microprismatique étant recouverte d'un revêtement (3d) diélectrique et le revêtement (3d) diélectrique étant couvert côté arrière d'une couche couvrante (3c), une différence entre l'indice de réfraction (n₂) du revêtement (3d) diélectrique et l'indice de réfraction (n₃, n₁) de la couche couvrante (3c) et/ou du matériau en matière plastique (3a) étant existante,
**caractérisée en ce que** le matériau en matière plastique (3a) et la couche couvrante (3c) remplissent chacun la structure en relief (3b) microprismatique, le revêtement (3d) est formé comme une tricouche (3d1, 3d2, 3d3) avec la séquence de couches à indice de réfraction élevé-à faible indice de réfraction-à indice de réfraction élevé et l'indice de réfraction (n₅) de la couche (3d3) jouxtant la couche couvrante (3c) de la séquence de couches du revêtement (3d) diélectrique est supérieur à l'indice de réfraction (n₃) de la couche couvrante (3c).

2. Structure réfléchissante selon la revendication 1, **caractérisée en ce que** le revêtement (3d) diélectrique comporte au moins un des matériaux suivants : ZnS, ZnO, ZnSe, SiNₓ, Cr₂O₃, SiOx (avec x<1, donc des composés d'oxyde de silicium sous-stoechiométriques), Nb₂O₅, Ta₂O₅, TiₓO_{y} et ZrO₂.

3. Structure réfléchissante selon l'une des revendications 1 ou 2, **caractérisée en ce que** le revêtement (3d) a une épaisseur de couche (t) entre 20 nm et 500 nm.

4. Structure réfléchissante selon la revendication 3, **caractérisée en ce que** l'épaisseur de couche (t) est comprise entre 40 nm et 150 nm.

5. Structure réfléchissante selon l'une des revendications 1 à 4, **caractérisée en ce que** le rayonnement rétroréfléchissant est un rayonnement infrarouge.

6. Structure réfléchissante selon l'une des revendications 1 à 5, **caractérisée en ce que** sont prévues de manière adjacente à la structure en relief (3b) une structure holographique et/ou une section de surface (5, 6) à effet miroir.

7. Structure réfléchissante selon l'une des revendications 1 à 6, **caractérisée en ce qu'**est prévue sous le revêtement (3d) ou sous la structure en relief (3b) une structure à rendu de motif et/ou de couleur.

8. Structure réfléchissante selon la revendication 7, **caractérisée en ce que** la structure à rendu de motif et/ou de couleur comporte une couche imprimée en couleur.

9. Structure réfléchissante selon l'une des revendications 1 à 8, **caractérisée en ce qu'**une métallisation est prévue par endroits sous le revêtement (3d) ou sous la structure en relief (3b).

10. Composite à films avec un film de support (1) et un film couvrant (2), entre lesquels le rétroréflecteur selon l'une des revendications 1 à 9 est disposé.

11. Structure à micro-images pour un ensemble de microlentilles, **caractérisée en ce qu'**elle comporte un rétroréflecteur selon l'une des revendications 1 à 9.
